Europäisches Patentamt

European Patent Office

Office européen des brevets

(11) Publication number: **0 091 738**
**B1**

## EUROPEAN PATENT SPECIFICATION

(45) Date of publication of patent specification: **04.03.87**

(21) Application number: **83301487.1**

(22) Date of filing: **17.03.83**

(51) Int. Cl.⁴: **G 02 B 6/38**

(54) Precise positioning of optical fibers.

(30) Priority: **14.04.82 CA 400945**

(43) Date of publication of application:
**19.10.83 Bulletin 83/42**

(45) Publication of the grant of the patent:
**04.03.87 Bulletin 87/10**

(84) Designated Contracting States:
**DE FR GB NL SE**

(56) References cited:
**EP-A-0 026 937**
**EP-A-0 030 617**
**US-A-3 999 841**

**PATENTS ABSTRACTS OF JAPAN, vol. 1, no.
108, 22nd September 1977, page 3725 E 77**

**PATENTS ABSTRACTS OF JAPAN, vol. 3, no.
66, 7th June 1979, page 70 E 115**

**PATENTS ABSTRACTS OF JAPAN, vol. 6, no. 8,
(P-98)886r, 19th January 1982, page 143 P 98**

(73) Proprietor: **NORTHERN TELECOM LIMITED
1600 Dorchester Boulevard West
Montreal Quebec H3H 1R1 (CA)**

(72) Inventor: **Abe, Koichi
1785 Riverside Drive Apt. No. 2502
Ottawa Ontario, K1G 3T7 (CA)**

(74) Representative: **Crawford, Andrew Birkby et al
A.A. THORNTON & CO. Northumberland House
303-306 High Holborn
London WC1V 7LE (GB)**

Courier Press, Leamington Spa, England.

## Description

The invention relates to a method and apparatus for accurately positioning the end of an optical fiber to maximize optical power transferred between the fiber and another fiber.

The invention can be used before fiber splicing, connecting, bonding, or anchoring operations.

Before splicing or connecting a pair of optical fibers for use in telecommunications, the adjacent fiber ends are fixed in positions ensuring maximum optical power transfer between them. Typically, an optical fiber used in telecommunications has a central core and an outer cladding, the core having a refractive index which is higher than that of the cladding and which increases towards the core axis. Optical power transfer is maximized if the fiber cores are axially aligned.

In a known method of aligning two fibers having nominally identical refractive index profile and outer diameter, the fiber ends are positioned close together and are pressed into a common V groove to automatically align part at least of the fiber outer surfaces. However, the cores are aligned only if the core and cladding of each fiber are accurately concentric and that can be achieved only through tight manufacturing tolerances with attendant cost.

A similar method is disclosed in US—A— 3 999 841, where a fiber end is identified and subsequently positioned and fixed within the center of a barrel part. Two barrel parts containing fiber end terminations are themselves used nominally to obtain fiber alignment.

Another known method for core alignment is to inject light at the far end of one fiber and monitor optical power received at the far end of the other fiber. The near ends of the fibers are manoeuvred and fixed in the relative disposition in which maximum optical power is monitored. The need for an optical source at the far end of one fiber and an optical detector at the far end of the other fiber is inconvenient in the field because of distance and equally inconvenient in factory splicing during fiber and cable manufacture where fiber is wound on storage reels.

A further method for fiber alignment is disclosed in JP—A—5 240 344, where light is polarised, reflected from the end face of a first fiber, reflected from the end face of a second fiber and then directed to a device to measure the intensity of the resultant light beam. The two fiber ends are moved relative to each other and intensity readings taken. The fibers are said to be aligned in the position where the intensity of the resultant light beam is a maximum. This method results in fibers with aligned central axes.

A type of fiber is disclosed in EP—A1—26927 which consists of a central core, an intermediate layer and outer cladding. If such a fiber's end face were to be viewed through a suitable microscope it would appear as a pattern of concentric rings.

According to one aspect of the invention there is provided a method of aligning two optical fibers prior to splicing thereof, the method comprising positioning an end portion of one fiber within a first jig so that an end surface of the fiber faces in a first direction, positioning an end portion of the second fiber within a second jig so that an end surface of the second fiber faces in a direction opposite to the first direction, the second jig being movable in three mutually orthogonal directions wherein one orthogonal direction is substantially aligned with said first direction, characterised by inspecting the end surface of the first fiber using a microscope having an optic axis extending generally perpendicular to the said one orthogonal direction and a reflector device located at the intersection of the said one orthogonal direction and the optic axis for directing light reflected from the first fiber end surface along said optic axis, establishing the disposition of a datum line relative to a first reflective discontinuity on the fiber end surface at a position of marked change in refractive index within the fiber, inspecting the end of the second fiber using the microscope and said reflector device after adjusting the reflector device to direct light reflected from the second fiber end surface along said optic axis, identifying a second reflective discontinuity on the second fiber end surface corresponding to said first reflective discontinuity, adjusting the second jig so as to achieve a corresponding disposition of the second reflective discontinuity relative to said datum line to attain fibre alignment, removing said reflector device, and moving the second jig so as to bring the fiber end surfaces towards one another.

Typically, optical fiber used in telecommunications has a refractive index which varies radially from the fiber axis to its outer surface. The refractive index variation is characterized by sharp discontinuities and, since material reflectivity is proportional to material refractive index, there are corresponding reflectivity discontinuities apparent on the end surface of a fiber. Typically, fiber has an outer cladding of lower refractive index than a central core. Maximum optical power transfer between the fibers can be achieved by using the method defined to axially align adjacent fiber cores.

The invention also provides apparatus for use in aligning two optical fibers prior to splicing thereof, the apparatus comprising a first jig for positioning therein an end portion of a first fiber, a second jig for positioning therein the end portion of a second fiber, the second jig being movable in three mutually orthogonal directions wherein the jigs are operable to align the fiber end portions with one orthogonal direction, characterised by means for inspecting the end surfaces of fibers positioned within the jigs, the inspection means comprising a microscope having an optic axis extending generally perpendicular to the said one orthogonal direction and a reflector device located at the intersection of the said one orthogonal direction and the optic axis, the reflector device movable between positions in which it directs an image of the end surface of the first fiber along the optic axis to a position in which it directs an image of the end surface of the second fiber along the optic axis, the reflector device further being movable away from the jigs to permit the movable jig to be moved towards the fixed jig to bring the fiber end surfaces together.

Preferably the reflector means is coupled to a light source located off the axis of the fiber and comprises a mirror device to direct light from the source generally perpendicular to the fiber end surface. Particularly, the apparatus further comprises means for mounting the mirror device between the opposed end surfaces of the fibers. The mirror device can be a pair of prisms located side-by-side, the device being drivable between two positions, in a first of which, a surface of one prism directs light at the end surface of one fiber and, in a second of which, a surface of the other prism directs light into the end surface of the other fiber. The mirror device can alternatively be a single mirror mounted on a carriage whereby in a first position the mirror reflects light from an off-axis source into the end surface of one fiber and, with the carriage rotated through 180°, the mirror directs light from the source into the end surface of the other fiber.

Embodiments of the invention will now be described, by way of example, with reference to the accompanying drawings in which:—

Figure 1 shows a schematic diagram of optical fiber alignment apparatus according to the invention;

Figure 2 shows a refractive index profile of a multimode graded index fiber;

Figure 3 shows an alternative form of mirror device for use in the method of the invention; and

Figures 4a to 4e show examples of monomode fiber index profile specifically tailored for use of the fiber alignment method described.

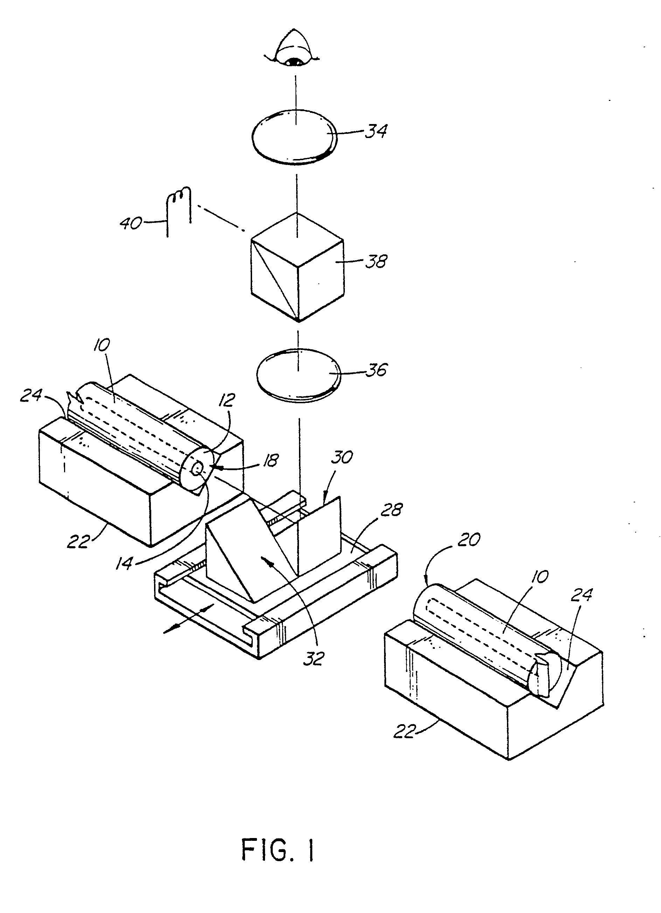

Referring in detail to Figure 1, there are shown two optical fibers 10, each fiber consisting of an outer cladding 12 of pure fused silica and a core 14 of doped fused silica, the dopant level varying radially to give a desired refractive index profile.

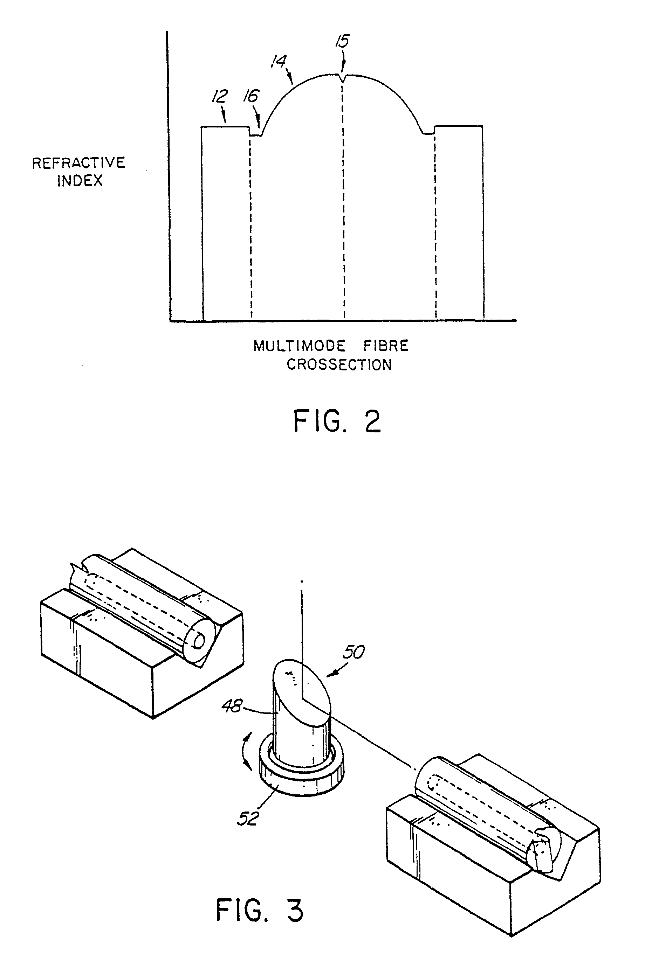

Typically, a multimode fiber has an outer diameter of 125 microns and a core diameter of 50 microns, the refractive index profile being as shown in Figure 2. The cladding 12 is of uniform refractive index and is separated from the core 14 by a thin barrier layer 16 of silica doped with fluorine or boron to lower the refractive index. The barrier layer is present to prevent impurity diffusion from the cladding to the core and also to make core deposition easier during manufacture. The core 14 is doped with germanium, the dopant level and thus the refractive index having an approximately parabolic profile across the core. The fiber represented in Figure 2 is produced by the well-known method of internally depositing doped material on the inside wall of a fused silica tube and then collapsing the tube. The Figure 2 profile, at the core axis, has a small but distinct reduction 15 in refractive index caused by loss of dopant at the tube internal surface during manufacture.

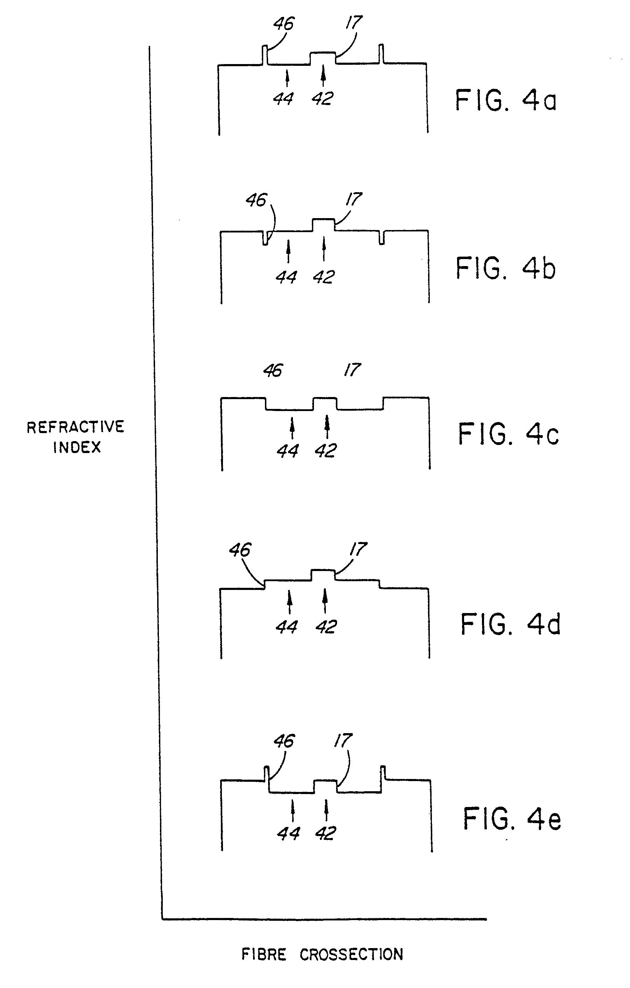

Typically, a monomode fiber has an outer diameter of 125 microns and a core diameter less than 10 microns. The refractive index profile, as shown in the Figure 4 examples, has a distinct step 17 where the core ends and the cladding begins.

In both multimode and monomode fibers, there are therefore distinct refractive index discontinuities which can be related to the position of the core within the fibers.

The reflectivity of a material is a function of refractive index. Consequently, if a fiber end surface which has been cleaved nearly mirror flat is illuminated under a microscope and reflected light is viewed, reflectivity discontinuities are clearly visible. The reflectivity R of the fiber end surface is given by the Fresnel equation:

$$R = \left( \frac{n(r)-1}{n(r)+1} \right)^2$$

where n(r) is the refractive index of the fiber as a function of the distance from the core center.

A refractive index profile for multimode graded index fiber is shown in Figure 2, the reflectivity profile being of a corresponding form since a 1% change in refractive index gives approximately a 5% change in reflected light intensity. Simply by visual observation, an abrupt change of the refractive index as small as 0.1% can quite easily be seen.

The reflectivity discontinuities can be used to accurately align fiber cores, this being the condition for maximum power transfer between a pair of fibers. As indicated previously, core alignment is especially important for monomode fiber where the core is less than 10 microns across compared to the full fiber diameter of 125 microns. Clearly, any concentricity error in core location will produce a very inefficient splice if the fibers are aligned merely by bringing their outer surfaces into registration.

Referring back to Figure 1, the ends of the two fibers 10 are supported on a jig with end surfaces 18 and 20 spaced typically 5 mm apart and with the fiber central axes approximately aligned. The jig is not shown in detail but is of a type used for fiber splicing purposes and is well-known in the art. It has independently movable heads 22 which can be driven by microscrew drives to change the separation of the heads, (Z axis drive), and to produce relative movement of the heads in the XY plane. In an upper surface of each head is a V groove 24 into which respective fibers 10 are pressed so that the fiber ends extend just beyond the ends of the grooves.

Between the two fiber end surfaces 18 and 20 is mounted a mirror device 16 consisting of two small prisms mounted side-by-side. The mirror device is supported on a carriage 28 which is mounted on a part of the jig which can be driven by the aid of a further microscrew device to enter the gap between the two fibers 10. The device can be moved between a first position in which a surface 30 of one prism lies on and extends at 45° to the fiber axes and a second position in which a surface 32 of the other prism lies on and extends at 45° to the fiber axes. In both of these positions, the relevant surface 30 or 32 also lies on and extends at 45° to the optic axis of a microscope having an eye-piece lens 34 and objective lens 36. Positioned on the optic axis is a beam splitter 38 which directs light from a source 40 through the objective lens 36 to be reflected from one or other of the surfaces 30 and 32 to the respective fiber end surface 18 or 20. Light is subsequently reflected from the fiber end surface 18 or 20 back through the objective lens 36 and the beam splitter 38 to the eye-piece 34. Typically, the microscope has a cross-hairs centered on the optic axis. In operation, the mirror device is moved first to a position in which end surface 18 is illuminated. The end surface is brought into focus by adjusting the Z axis microscrew. On viewing the end surface 18, the cross-hairs center and the reflectivity dip which, as explained previously, marks the position of the core axis will not normally coincide. The XY microscrews are then adjusted to move the left-hand V groove and the fiber end surface 18 in an XY plane perpendicular to the fiber axis. Once coincidence between the cross-hairs and the reflectivity dip is achieved, the mirror device is driven to its second position and coincidence of the cross-hair center and the core center reflectivity dip of the other fiber is achieved by a similar adjustment. Because the mirror surfaces are accurately inclined at 45° to both the fiber axes and the microscope optic axis, this dual adjustment automatically aligns the fiber cores. Finally, the mirror device 16 is withdrawn from between the fiber end surfaces 18 and 20 and the Z axis microscrew is adjusted to bring the fiber ends sufficiently close for splicing.

As is well known in the art, the Z axis microscrew is, in fact, moved during a subsequent splicing operation in order to avoid necking of the fiber at the splice zone. The X and Y microscrews are maintained in place until splicing is complete. As mentioned, the fibers 20 before splicing, project just beyond the end surfaces of heads 22 and are separated by a few microns. The separation of the heads 22 permits electrodes of an arc fusion device to be positioned close to the fiber ends when splicing the two fibers.

An alternative mirror device to the double prism 16 is shown in Figure 3. The device consists of a steel rod 48 of 3 mm diameter having a highly polished end surface 50 inclined at 45° to the rod axis. The base of the rod is mounted within a rotatable carriage shown schematically as 52. The carriage can be driven through exactly 180° using a microscrew device (not shown). In use, the rod 48 is mounted below a microscope with the rod axis coaxial with the microscope optical axis and the mirror surface inclined at 45° both to the optical axis and to the axes of the two fibers which are to be joined. As in the previous embodiment, the end surface of one fiber is viewed and adjustment of the fiber end made to bring the low reflectivity core center into registration with a datum line corresponding to the microscope cross-hairs. The rod is then turned through exactly 180° and the procedure is repeated. Once both core centers are in registration with the datum line, then they must automatically be axially aligned.

As indicated previously, monomode fibers for which accurate core alignment is most critical, have a core diameter less than 10 microns and a cladding of 125 microns. The relatively higher reflectivity core is, therefore, a very small feature within the end surface of the fiber. To facilitate fiber core alignment using the method described, an additional refractive index discontinuity can be introduced into the fiber during manufacture. The refractive index profile of each of the Figures 4*a* to 4*e* are taken along a diameter of a monomode fiber which is symmetrical about a longitudinal axis. The monomode fibers have a core 42 and an intermediate cladding layer 44, the refractive indexes and dimensions of which are chosen to ensure monomode transmission through the fiber. Radially outside the cladding 44 is a refractive index discontinuity 46 which may be embodied as a small annular ring of relatively high index (Figure 4*a*), or relatively low index (Figure 4*b*). Alternatively, it may be embodied as a step up, (Figure 4*c*), or a step down (Figure 4*d*), in refractive index. Finally, it may utilize both features as shown in the Figure 4*e* profile. In the well-known vapour deposition method for fiber production, silica, containing a certain dopant to change its refractive index, is deposited on the inside surface of a fused silica tube. Subsequently, the tube is heated and collapsed into a rod from which fiber is pulled. The Figure 4 profiles can be obtained by suitably doping silica with germanium to raise the refractive index or fluorine to lower it, and continuing the deposition cycle sufficiently long to obtain the layer thickness desired.

In the embodiments described, the illumination and observation directions are both at 90° to the fiber end surface, the incident and reflected light thus travelling along the microscope optical axis. Although this angle is preferred since it offers spatial economy, it is not critical.

**Claims**

1. A method of aligning two optical fibers (10) prior to splicing thereof, the method comprising positioning an end portion of one fiber within a first jig (22) so that an end surface of the fiber faces in a first direction, positioning an end portion of the second fiber within a second jig (22) so that an end surface of the second fiber faces in a direction opposite to the first direction, the second jig being movable in three mutually orthogonal directions (x, y, z) wherein one orthogonal direction (z) is substantially aligned with said first direction, characterised by inspecting the end surface of the first fiber using a microscope (34, 36) having an optic axis extending generally perpendicular to the said one orthogonal direction (z) and a reflector device (30, 50) located at the intersection of the said one orthogonal direction (z) and the optic axis for directing light reflected from the first fiber end surface along said optic axis, establishing the disposition of a datum line relative to a first reflective discontinuity (15) on the fiber end surface at a position of marked change in refractive index within the fiber, inspecting the end of the second fiber using the microscope (34, 36) and said reflector device (30, 50) after adjusting the reflector device to direct light reflected from the second fiber end surface along said optic axis, identifying a second reflective discontinuity on the second fiber end surface corresponding to said first reflective discontinuity, adjusting the second jig so as to achieve a corresponding disposition of the second reflective discontinuity relative to said datum line to attain fibre alignment, removing said reflector device, and moving the second jig so as to bring the fiber end surfaces towards one another.

2. A method as claimed in claim 1 in which the reflective discontinuity corresponds to a point at the interface of a core region (42) and a cladding region (44) of the fiber (Fig. 4).

3. A method as claimed in claim 2 in which the reflective discontinuity (15) used is a low reflectivity dip in a high reflectivity core in each of the fibers (Fig. 2).

4. Apparatus for use in aligning two optical fibers (10) prior to splicing thereof, the apparatus comprising a first jig (22) for positioning therein an end portion of a first fiber, a second jig for positioning therein the end portion of a second fiber, the second jig being movable in three mutually orthogonal directions (x, y, z) wherein the jigs are operable to align the fiber end portions with one orthogonal direction, characterised by means for inspecting (34, 36) the end surfaces of fibers positioned within the jigs, the inspection means comprising a microscope (34, 36) having an optic axis extending generally perpendicular to the said one orthogonal direction and a reflector device (30, 50) located at the intersection of the said one orthogonal direction and the optic axis, the reflector device (30, 50) movable between positions in which it directs an image of the end surface of the first fiber along the optic axis to a position in which it directs an image of the end surface of the second fiber along the optic axis, the reflector device (30, 50) further being movable away from the jigs (22) to permit the movable jig to be moved towards the fixed jig to bring the fiber end surfaces together.

5. Apparatus as claimed in claim 4, in which the reflector device (30) comprises a pair of prisms (32) located side-by-side, the device being drivable between two positions, in a first of which, a surface of one prism directs light from a source (40) into the end surface (18) of one fiber (10) and, in a second position, a surface of the other prism directs light from the source into the end surface of the other fiber.

6. Apparatus according to claim 4, in which the reflector device is a plane mirror (50) mounted on a rotatable carriage (52) angularly movable between a first position in which the mirror reflects light from a source into the end surface of one fiber and a second position in which the mirror reflects light from the source into the end surface of the other fiber.

7. Apparatus as claimed in claim 4, in which the jigs each have a V-groove in a top surface thereof, the V-grooves being approximately aligned.

**Patentansprüche**

1. Verfahren zur Ausrichtung von zwei optischen Fasern (10), bevor diese miteinander verbunden werden, das folgende Schritte aufweist; Positionieren eines Endabschnitts einer Faser innerhalb eines ersten Montagegestells (22), so daß eine Endfläche der Faser in eine erste Richtung gerichtet ist, Einrichten eines Endabschnitts der zweiten Faser innerhalb eines zweiten Montagegestells (22), so daß eine Endfläche der zweiten Faser in eine der ersten Richtung entgegengesetzte Richtung weist, wobei das zweite Montagegestell in drei zueinander orthogonale Richtungen (x, y, z), wovon eine orthogonale Richtung (z) im wesentlichen mit der ersten Richtung ausgerichtet ist, bewegbar ist, gekennzeichnet durch die folgenden Schritte: Betrachten der Endfläche der ersten Faser unter Verwendung eines Mikroskops (34, 36), das eine optische Achse besitzt, die sich im allgemeinen rechtwinklig zu der einen Orthogonalrichtung (z) erstreckt, und einer Reflektorvorrichtung (30, 50), die am Schnittpunkt der ersten Orthogonalrichtung (z) und der optischen Achse angeordnet ist, um von der ersten Faserendfläche reflektiertes Licht entlang der optischen Achse zu richten, Einrichten der Einteilung einer Grundlinie relativ zu einer ersten reflektierenden Diskontinuität (15) auf der Faserendfläche in einer Position deutlicher Änderung des Berechnungsindex' innerhalb der Faser, Betrachten des Endes der zweiten Faser unter Verwendung des Mikroskops (34, 36) und der Reflektorvorrichtung (30, 50) nach dem Einstellen der Reflektorvorrichtung, um von der zweiten Faserendfläche reflektiertes Licht entlang der optischen Achse zu richten, Identifikation einer zweiten reflektierenden Diskontinuität auf der zweiten Faserendfläche, die zur ersten reflektierenden Diskontinuität paßt, Einstellen des zweiten Montagegestells, um so eine zugehörige Anordnung der reflektierenden Diskontinuität relativ zur Grundlinie zu erhalten und eine Ausrichtung der Fasern zu erzielen, Entfernen der Reflektorvorrichtung und Bewegen des zweiten Montagegestells, um so die Faserendflächen zusammenzubringen.

2. Verfahren nach Anspruch 1, bei dem die reflektierende Diskontinuität einem Punkt an der Schnittstelle zwischen einem Kernbereich (42) und einem Ummantelungsbereich (44) der Faser entspricht.

3. Verfahren nach Anspruch 2, in dem die verwendete reflektierende Diskontinuität (15) eine Senke geringer Reflektionsfähigkeit in einem hoch reflektierenden Kern in jeder der Fasern ist (Fig. 2).

4. Vorrichtung zur Anwendung beim Ausrichten zweier optischer Fasern (10) bevor diese miteinander verbunden werden, mit einem ersten Montagegestell (22) um darin einen Endabschnitt einer ersten Faser einzurichten, einem zweiten Montagegestell, um darin den Endabschnitt einer zweiten Faser einzurichten, wobei das zweite Montagegestell in drei zueinander orthogonale Richtungen (x, y, z) bewegbar ist und die Montagegestelle betätigbar sind, um die Faserendabschnitte mit einer orthogonalen Richtung auszurichten, dadurch gekennzeichnet, daß Einrichtungen (34, 36) zum Betrachten der Endflächen von Fasern, die in den Montagegestellen positioniert sind, vorgesehen sind, wobei die Betrachtungseinrichtungen ein Mikroskop (34, 36) umfassen, das eine allgemein rechtwinklig zu der einen orthogonalen Richtung sich erstreckende optische Achse und eine am Schnittpunkt der einen orthogonalen Richtung und der optischen Achse gelegene Reflektorvorrichtung besitzt, welche zwischen einer Position, in der sie ein Bild der Endfläche der ersten Faser entlang der optischen Achse richtet und einer Position, in der sie ein Bild der Endfläche der zweiter Faser entlang der optischen Achse richtet, bewegbar ist, und daß die Reflektorvorrichtung (30, 50) darüberhinaus von den Montagegestellen (22) wegbewegbar ist, um die Bewegung des bewegbaren Montagegestell zum festen Montagegestell hin zu erlauben und die Faserendflächen zusammenzubringen.

5. Vorrichtung nach Anspruch 4, in dem die Reflektorvorrichtung (30) ein Paar nebeneinander angeordneter Prismen (32) umfaßt und zwischen zwei Positionen bewegbar ist, von denen in einer ersten eine Oberfläche eines Prismas Licht von einer Quelle (40) auf die Endfläche (18) einer Faser (10) richtet und in einer zweiten Position eine Oberfläche des anderen Prismas Licht von der Quelle auf die Endfläche der anderen Faser richtet.

6. Vorrichtung nach Anspruch 4, in welcher die Reflektorvorrichtung aus einem ebenen Spiegel (50) besteht, der auf einem drehbaren Träger (52) angeordnet ist, der zwischen einer ersten Position, in welcher der Spiegel Licht von einer Quelle auf die Endfläche einer Faser reflektiert, und einer zweiten Position, in der der Spiegel Licht von der Quelle auf die Endfläche der anderen Faser reflektiert, um einen Winkel bewegbar ist.

7. Vorrichtung nach Anspruch 4, in welcher die Montagegestelle jeweils in einer oberen Fläche eine V-Nut besitzen und die V-Nuten annähernd miteinander ausgerichtet sind.

**Revendications**

1. Procédé pour mettre en alignement deux fibres optiques (10) avant leur raccordement, le procédé comprenant la mise en place d'une partie d'extrémité d'une fibre à l'intérieur d'un premier gabarit (22) de façon qu'une surface extrême de la fibre soit dirigée dans une première direction, la mise en place d'une partie d'extrémité de la seconde fibre à l'intérieur d'un second gabarit (22) de façon qu'une surface extrême de la seconde fibre soit dirigée dans une direction opposée à la première, le second gabarit étant mobile suivant trois directions perpendiculaires les unes aux autres (x, y, z) où une direction orthogonale (z) est sensiblement en alignement avec la première direction, caractérisé par les étapes consistant à inspecter la surface extrême de la première fibre en utilisant un microscope (34, 36) ayant un axe optique s'étendant généralement perpendiculairement à ladite direction orthogonale (Z) et un dispositif à réflecteur (30, 50) situé à l'intersection de ladite direction orthogonale (z) et de l'axe optique afin de diriger la lumière réfléchie par la surface extrême de la première fibre suivant l'axe optique à établir la disposition d'une ligne de référence par rapport à une première discontinuité réfléchissante (15) sur la surface extrême de la fibre à un endroit de changement notable de l'indice de réfraction à l'intérieur de la fibre, à inspecter l'extrémité de la seconde fibre en utilisant le microscope (34, 36) et le dispositif à réflecteur (30, 50) après ajustement du dispositif à réflecteur de manière à diriger la lumière réfléchie par la surface extrême de la seconde fibre suivant l'axe optique, à identifier une seconde discontinuité réfléchissante sur la surface extrême de la seconde fibre correspondant à la première discontinuité réfléchissante, à régler le second gabarit de manière à obtenir une disposition correspondante de la seconde discontinuité réfléchissante par rapport à la ligne de référence, et atteindre l'alignement de la fibre, à enlever le dispositif à réflecteur, et à déplacer le second gabarit de manière à amener les surfaces extrêmes des fibres l'une ver l'autre.

2. Procédé selon la revendication 1, dans lequel la discontinuité réfléchissante correspond à un point situé à l'interface d'une région d'âme (42) et d'une région d'habillage (44) de la fibre (figure 4).

3. Procédé selon la revendication 2, dans lequel la discontinuité réfléchissante (15) utilisée est un creux de faible réflectivité dans une âme de réflectivité élevée dans chacune des fibres (figure 2).

4. Appareil destiné à être utilisé dans la mise en alignement de deux fibres optiques (10) avant leur raccordement, l'appareil comprenant un premier gabarit (22) pour y mettre en place une partie d'extrémité d'une première fibre, un second gabarit pour y mettre en place la partie d'extrémité d'une seconde fibre, le second gabarit étant mobile dans trois directions perpendiculaires les unes aux autres (x, y, z), où les gabarits peuvent être actionnés pour aligner les parties d'extrémité des fibres avec une direction orthogonale, caractérisé par un moyen pour inspecter (34, 36) les surfaces d'extrémité des fibres placées à l'intérieur des gabarits, le moyen d'inspection comprenant un microscope (34, 36) ayant un axe optique qui s'étend généralement perpendiculairement à ladite direction orthogonale et un dispositif à réflecteur (30, 50) placé à l'intersection de ladite direction orthogonale et de l'axe optique, le dispositif à réflecteur (30, 50) étant mobile entre des positions dans lesquelles il dirige une image de la surface extrême de la première fibre suivant l'axe optique jusqu'à une position dans laquelle il dirige une image de la surface extrême de la seconde fibre suivant l'axe optique, le dispositif à réflecteur (30, 50) pouvant en outre être éloigné des gabarits (22) pour permettre au gabarit mobile d'être déplacé dans la direction du gabarit fixe afin de réunir les surfaces extrêmes des fibres.

5. Appareil selon la revendication 4, dans lequel le dispositif à réflecteur (30) comprend une paire de prismes (32) placés côte à côte, le dispositif pouvant être entraîné entre deux positions, dans la première desquelles une surface d'un prisme dirige la lumière provenant d'une source (40) de manière à la faire tomber sur la surface extrême (18) d'une fibre (10), et dans la seconde position, une surface de l'autre prisme dirige la lumière provenant de la source pour la faire tomber dans la surface extrême de l'autre fibre.

6. Appareil selon la revendication 4, dans lequel le dispositif à réflecteur est un miroir plan (50) monté sur un chariot tournant (52) pouvant être angulairement déplacé entre une première position dans laquelle le miroir réfléchit la lumière provenant d'une source pour la faire tomber sur la surface extrême d'une fibre et une seconde position dans laquelle le miroir réfléchit la lumière provenant de la source pour la faire tomber sur la surface extrême de l'autre fibre.

7. Appareil selon la revendication 4, dans lequel les gabarits comportent chacun une rainure en V dans leur surface supérieure, les rainures en V étant approximativement en alignement.

FIG. I

0 091 738

REFRACTIVE
INDEX

MULTIMODE FIBRE
CROSSECTION

FIG. 2

FIG. 3

REFRACTIVE
INDEX

FIG. 4a

FIG. 4b

FIG. 4c

FIG. 4d

FIG. 4e

FIBRE CROSSECTION